# EUROPÄISCHE PATENTSCHRIFT

(11) **EP 0 368 028 B1**
(45) Veröffentlichungstag und Bekanntmachung des Hinweises auf die Patenterteilung: **28.09.1994**
(21) Anmeldenummer: 89119125.6
(22) Anmeldetag: 14.10.1989
(51) Int. Cl.: B26D 11/00, B26D 7/06

(54) **Verfahren zur Herstellung von Mattenstreifen aus breiteren klebrigen, mit Deckfolien belegten Werkstoffbahnen und Vorrichtung zur Durchführung des Verfahrens**
Method and apparatus for making layers from broader webs having a protective layer
Méthode et dispositif de fabrication de couches en partant de bandes plus larges ayant une couche de protection

(30) Priorität: 11.11.1988 DE 3838271
(43) Veröffentlichungstag der Anmeldung: 16.05.1990
(73) Patentinhaber: Umformtechnik ERFURT GmbH, D-99086 Erfurt (DE)
(72) Erfinder: Brüssel, Richard, D-7519 Sulzfeld (DE)

(56) Entgegenhaltungen:
- CH-A- 442 228
- DE-B- 2 932 698
- US-A- 2 661 801
- US-A- 4 294 144
- US-A- 4 295 907
- PLASTVERARBEITER, Band 33, Nr. 4, April 1982, Seiten 399-403, Speyer/Rhein, DE;W. ERMERT et al.: "Herstellung von Bauteilen aus CFK mit Industrierobotern"

## Beschreibung

Die Erfindung betrifft ein Verfahren zur Herstellung von Mattenstreifen aus breiteren klebrigen, mit Deckfolien belegten Werkstoffbahnen, insbesondere SMC-Harzmattenbahnen, durch Unterteilen der Werkstoffbahnen in Längs- und in Querrichtung und durch Abziehen der Deckfolien gemäß dem Oberbegriff des Anspuchs 1. Gegenstand der Erfindung ist ferner eine Vorrichtung zur Durchführung des Verfahrens mit einer zumindest einen messer aufweisenden Längsschneideinrichtung, einer Querschneideinrichtung und einer Vorschubeinrichtung, durch die die Werkstoffbahn in den Wirkbereich der Längs- und Querschneideinrichtung zuführbar ist, mit einem Deckfolienabzug, einer den Schneideinrichtungen vorgelagerten Klemmeinrichtung zum Festklemmen der Werkstoffbahn und mit einer Transporteinrichtung, auf der die Mattenstreifen ablegbar sind.

Vor der Verarbeitung der hier besonders interessierenden Harzmattenbahnen zu Preßteilen müssen erstere von ihren Deckfolien befreit und (im Normalfall) in rechteckige Mattenstreifen unterteilt werden.
Bei den bisher bekannten Verfahren werden die Harzmattenbahnen entweder ohne Entfernung ihrer Deckfolien in Längs- und in Querrichtung unterteilt; die Deckfolien werden dabei erst anläßlich der Zusammenstellung mehrerer Mattenstreifen zu Mattenpaketen von Hand abgelöst.
Bekannt ist ferner ein automatisiertes Herstellverfahren, bei dem die mit Deckfolien belegte Harz-Mattenbahn vor dem Bereich der Vorschubeinrichtung in Längsrichtung unterteilt wird. Der Nachteil dieser Vorgehensweise und des sich ergebenden Aufbaus ist darin zu sehen, daß die Vorschubeinrichtung durch austretende Harzmasse verunreinigt wird und das spätere Abziehen der Deckfolien von den schmalen Mattenstreifen erhebliche Schwierigkeiten bereitet. Die durch den Längsschnitt bereits voneinander getrennten Mattenstreifen werden bei Durchlauf durch die Vorschubeinrichtung unter Umständen derart gegeneinander gedrückt, daß sie wieder zusammenkleben.

Eine bekannte Vorrichtung zur Herstellung von Mattenstreifen der eingangs genannten Art (US-A-4,294,144) enthält in der Durchlaufrichtung der Werkstoffbahn hintereinander angeordnet einen Deckfolienabzug für die obere Deckfolie, eine Längsschneideinrichtung zum Teilen der Werkstoffbahn in mehrere Mattenstreifen, einen Deckfolienabzug für die untere Deckfolie, eine Querschneideinrichtung zum Abtrennen der Mattenstreifen von der Werkstoffbahn und einen Bandförderer zum Abführen der Mattenstreifen.
Beim Vorlauf der Werkstoffbahn wird zunächst die obere Deckfolie abgezogen und die Werkstoffbahn einschließlich der unteren Deckfolie mittels der Längsschneideinrichtung kontinuierlich mit der Vorlaufbewegung in Mattenstreifen geschnitten, die auf dem Bandförderer liegend weitertransportiert und bei Erreichen der jeweils vorgesehenen Streifenlänge mittels der Querschneideinrichtung von der Werkstoffbahn getrennt werden.
Um ein Durchschneiden der unteren Deckfolie quer zur Durchlaufrichtung zu vermeiden, wird im Bereich der Querschneideinrichtung die untere Deckfolie von den Mattenstreifen abgezogen, mittels Umlenkwalzen um das untere Stützelement der Querschneideinrichtung herumgeführt und anschließend wieder mit den Mattenstreifen zusammengeführt. Der Nachteil dieses Verfahrens und des sich daraus ergebenden Aufbaus ist darin zu sehen, daß das spätere Abziehen der unteren Deckfolien von den schmalen Mattenstreifen sowie das Ablegen auf einer Transporteinrichtung - ggf. auch die Bildung von Mattenstapeln durch die Ablage mehrerer Mattenstreifen übereinander - mit erheblichen Schwierigkeiten verbunden ist.
Der Erfindung liegt demgegenüber die Aufgabe zugrunde, ausgehend von US-A-4 294 144 ein Verfahren und eine Vorrichtung zu entwickeln, bei dem das Längsschneiden und Mitführen der unteren Deckfolie vermieden wird, die Werkstoffbahnen in alternativer Weise an den Schneideinrichtungen vorbeigeführt werden, wobei ein Ablegen der Mattenstreifen auf einer Transporteinrichtung - ggf. auch unter Bildung von Mattenstapeln - ermöglicht wird und eine alternative Querschneideinrichtung verwendet wird.

Die gestellte Aufgabe wird durch ein Verfahren mit den Merkmalen des Anspruchs 1 gelöst. Der der Erfindung zugrunde liegende Lösungsgedanke besteht danach im wesentlichen darin, die von den Deckfolien befreite Werkstoffbahn mittels beweglicher Greiforgane der Einwirkung zunächst einer Längsschneideinrichtung zu zuführen und die dabei entstanden Mattenstreifen bei festgehaltener Werkstoffbahn von dieser durch Betätigen einer Querschneideinrichtung (der gewünschten Längenabmessung entsprechend) abzutrennen.
Im Gegensatz zum bekannten Stand der Technik werden also beide Schnittvorgänge nach dem Abziehen der Deckfolien von der Werkstoffbahn ausgeführt. Mit den Greiforganen wird lediglich der Endabschnitt der klebrigen Werkstoffbahn erfaßt und mitbewegt.

Vorzugsweise wird das Verfahren in der Weise ausgeführt, daß von der Längsschneideinrichtung zumindest zeitweilig eine der Mitnahmebewegung der Greiforgane entgegengerichtete Schnittbewegung ausgeführt wird (Anspruch 2); durch diese Vorgehensweise arbeitet die Längsschneideinrichtung mit einer hohen Einschnittgeschwindigkeit und ermöglicht dadurch einen sauberen Anschnitt der Werkstoffbahn.
Das Verfahren gemäß Anspruch 2 kann insbesondere in der Weise ausgebildet sein, daß die Längsschneideinrichtung durch eine Schwenkbewegung mit der Werkstoffbahn in Eingriff gebracht wird (Anspruch 3).

Um sicherzustellen, daß die Greiforgane den Endabschnitt der Werkstoffbahn einwandfrei erfassen können, wird das Verfahren in der Weise ausgeführt, daß die Greiforgane vor der Annäherung an den Endabschnitt der Werkstoffbahn bezüglich deren Ebene in geöffnetem Zustand eine Schwenkbewegung ausführen (Anspruch 4).

Die zur Herstellung schmaler Mattenstreifen - und damit zur Durchführung des Verfahrens - geeignete Vorrichtung weist die Merkmale des Anspruchs 5 auf. Erfindungswesentliche Bestandteile sind danach (ihrer Aufeinanderfolge nach geordnet) die Klemmeinrichtung, der Folienabzug, die Querschneideinrichtung und die Längschneideinrichtung. Wesentlicher Bestandteil sind weiterhin die zangenförmigen Greiforgane, über welche die Werkstoffbahn - an ihrem freien Endabschnitt gehalten - durch den Wirkbereich der Längsschneideinrichtung gezogen werden kann, wobei diese derart ausgebildet ist, daß ihre Messer eine der Mitnahmebewegung der Greiforgane entgegengerichtete Schnittbewegung ausführen können. Abhängig von der Anzahl der zu erzeugenden Mattenstreifen weist die Längsschneideinrichtung ein oder mehrere Messer auf: Bei Verwendung eines Messers wird die Werkstoffbahn in zwei Mattenstreifen unterteilt.

Die erforderliche Beweglichkeit der Greiforgane wird dadurch verwirklicht, daß diese an einem Schlitten gehalten entlang einer Führungsbahn hin und her verfahrbar sind (Anspruch 6).
Zur Verbesserung der Betriebssicherheit der Greiforgane ist der der Klemmeinrichtung zugewandte Abschnitt der Führungsbahn schwenkbar gehalten (Anspruch 7). Bei einer anderen vorteilhaften Ausführungsform des Erfindungsgegenstandes sind die Greiforgane bezüglich des Schlittens schwenkbar und über einen Schwenkantrieb in unterschiedlichen Schwenkstellungen festhaltbar (Anspruch 8).

Die Vorrichtung kann dadurch weiter ausgestaltet sein, daß das zumindest eine Messer der Längsschneideinrichtung um eine unterhalb der Ebene der Werkstoffbahn angeordnete Achse drehbar an einem Schwenkarm gehalten ist, an dem ein Schwenkantrieb angreift (Anspruch 9). Durch entsprechende Betätigung des Schwenkantriebs läßt sich jedes Messer der Längsschneideinrichtung von unten mit großer Geschwindigkeit in den Bereich der Werkstoffbahn einschwenken, was eine günstig hohe Einschnittgeschwindigkeit zur Folge hat.

Die Erfindung wird nachfolgend anhand der Zeichnung im einzelnen erläutert. Es zeigen:
- Fig. 1: schematisch den Aufbau einer Einrichtung zur Herstellung von Mattenstreifen bis zur Querschneideinrichtung,
- Fig. 2: in gegenüber Fig. 1 vergrößertem Maßstab schematisiert den Aufbau des Erfindungsgegenstandes im Anschluß an die (auch in Fig. 1 dargestellte) Klemmeinrichtung und
- Fig. 3: eine Draufsicht auf die bereits teilweise in Längsrichtung unterteilte Harzmattenbahn.

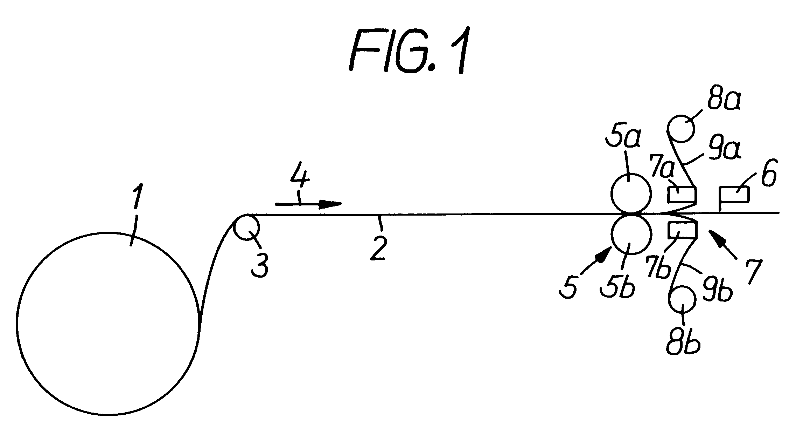

Wie in Fig. 1 gezeigt, wird von einem Coil 1 eine SMC-Harzmattenbahn 2 an einer Umlenkwalze 3 vorbei in Richtung des Pfeiles 4 abgewickelt und über eine Vorschubeinrichtung 5 mit Vorschubwalzen 5a, 5b einer Querschneideinrichtung 6 zugeführt, mittels welcher die klebrige Harzmattenbahn in Querrichtung unterteilt werden kann.

Zwischen der Vorschubeinrichtung 5 und der Querschneideinrichtung 6 ist einerseits eine Klemmeinrichtung 7 mit höhenverstellbaren Klemmbacken 7a, 7b und andererseits ein Deckfolienabzug mit Abzugswalzen 8a, 8b angeordnet. Der Deckfolienabzug dient dazu, die auf der Harzmattenbahn 2 angeordnete obere und untere Deckfolie 9a bzw. 9b nach oben bzw. unten abzuziehen, wobei die während der Zuführbewegung der Harzmattenbahn 2 geöffneten Klemmbacken gleichzeitig als Messerkante dienen.
Der Erfindungsgegenstand arbeitet also in dem hier interessierenden Zusammenhang in der Weise, daß die Harzmattenbahn 2 erst nach dem Abziehen der Deckfolien 9a, 9b als nach außen hin klebrige Werkstoffbahn vorliegt. Während der im nachfolgenden noch zu beschreibenden Schnittvorgänge wird die Zuführbewegung der Harzmattenbahn 2 (in Fig. 1 nach rechts) unterbrochen; die Klemmeinrichtung 7 nimmt dann die Schließstellung ein, in welcher die Klemmbacken 7a, 7b die Harzmattenbahn 2 und auch die Deckfolien festhalten.

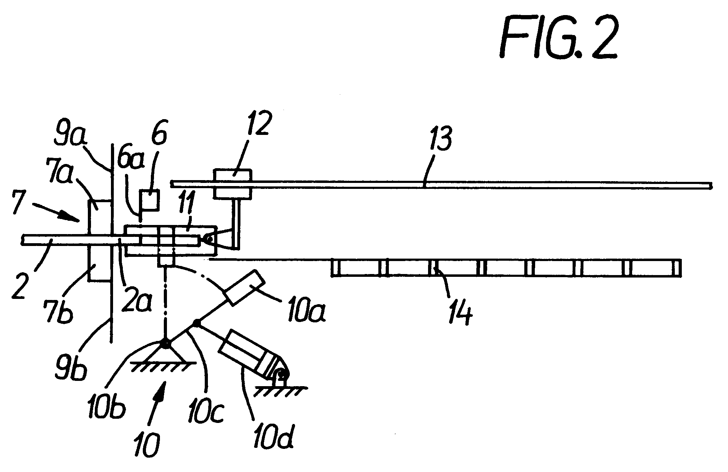

Der Querschneideinrichtung 6 mit Quermesser 6a ist - in Bewegungsrichtung (Pfeil 4 in Fig. 1) der Harzmattenbahn 2 gesehen - eine Längsschneideinrichtung 10 nachgeschaltet; diese weist - der gewünschten Anzahl der zu erzeugenden Mattenstreifen entsprechend - ein oder mehrere Messer 10a auf (vergl . Fig. 2).
Jedes Messer ist um eine unterhalb der Ebene der Werkstoffbahn angeordnete ortsfeste Achse 10b drehbar an einem Schwenkarm 10c gehalten, der mittels eines Schwenkantriebs in Form eines Zylinderaggregats 10d hin und her bewegt werden kann. Die Längsschneideinrichtung 10 ist dabei in der Weise ausgebildet, daß jedes Messer 10a durch Einschwenken von unten in den Bereich der Harzmattenbahn 2 eine deren Zuführbewegung entgegengerichtete Schnittbewegung in Längsrichtung der Harzmattenbahn ausführen kann. In der Darstellung wird die Schnittbewegung durch Bewegen des Schwenkarms 10c im Gegenuhrzeigersinn hervorgerufen.

Der Erfindungsgegenstand ist weiterhin mit mehreren zangenförmigen Greiforganen 11 ausgestattet, die an einem Schlitten 12 befestigt entlang einer Führungsbahn 13 soweit in Richtung auf die Klemmeinrichtung 7 verfahren werden können, daß sie den über die Klemmbacken 7a, 7b nach rechts hinausragenden Endabschnitt 2a erfassen und festhalten können; dieser Endabschnitt erstreckt sich - der Lage der Querschneideinrichtung 6 entsprechend - bis zum Wirkbereich des Quermessers 6 a.

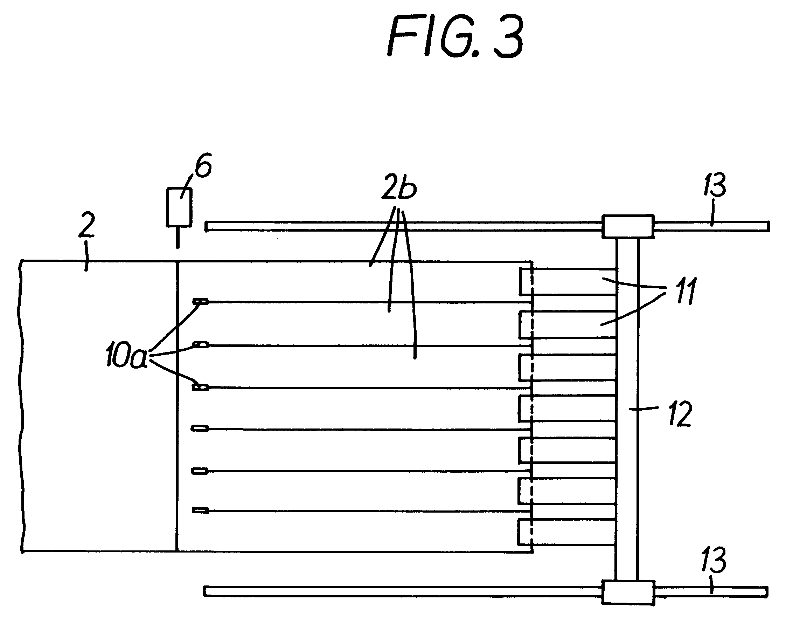

Die Unterteilung der zuvor von den Deckfolien 9a, 9b befreiten Harzmattenbahn durch in Längs- und Querrichtung verlaufende Schnitte geht folgendermaßen vor sich:
Nach dem Schließen der Klemmeinrichtung 7 werden die geöffneten Greiforgane 11 entlang der Führungsbahn 13 bis in den Bereich des freien Endabschnitts 2a der Harzmattenbahn 2 verfahren; die Schneideinrichtungen 6 und 10 nehmen dabei die Ruhestellung ein, in welcher das Quermesser 6a hochgeschwenkt bzw. das zumindest eine Messer 10a in Richtung auf das Zylinderaggregat 10d zurückgeschwenkt ist.
Nach Schließen der Greiforgane 11 und Öffnen der Klemmeinrichtung 7 wird die Harzmattenbahn 2 - bei gleichzeitiger Entfernung ihrer Deckfolien 9a, 9b - durch Bewegen der Greiforgane 11 nach rechts mitgeführt. Darüber hinaus wird die Längsschneideinrichtung 10 durch Ausfahren des Zylinderaggregats 10d in Betrieb gesetzt mit der Folge, daß jedes Messer 10a an den sich bewegenden Greiforganen 7 vorbei eine Schnittbewegung ausführt und dabei die von den Greiforganen mitgeführte Harzmattenbahn in Längsrichtung in mehrere Mattenstreifen 2b unterteilt (vergl. dazu Fig. 3). Sobald die Harzmattenbahn der gewünschten Länge der Mattenstreifen entsprechend in Längsrichtung unterteilt ist, wird die Bewegung der Harzmattenbahn 2 durch Stillsetzen der Greiforgane 11 und der in Fig. 1 dargestellten Vorschubeinrichtung 5 unterbrochen, die Klemmeinrichtung 7 geschlossen und durch Betätigen der Querschneideinrichtung 6 die Harzmattenbahn 2 quer zu ihrer Längserstreckung unterteilt, wobei sich auch der bereits erwähnte, frei vorkragende Endabschnitt 2a bildet.
Unmittelbar nach Beendigung des Querschneidevoganges setzen die Greiforgane 11 ihre Mitnahmebewegung bis in den Bereich einer rechenförmigen Transporteinrichtung 14 fort.Dabei wird die Werkstoffbahn 2 weiter durch die Messer 10a der Längsschneideinrichtung 10 gezogen, bis die Mattenstreifen 2b vollständig voneinander getrennt sind, und die erzeugten Mattenstreifen 2b werden, gegebenenfalls auch unter Bildung von Mattenstapeln, durch Öffnen der Greiforgane 11 auf der Transporteinrichtung 14 abgelegt.Die rechenförmige Ablage 14 ist sowohl in vertikaler als auch in horizontaler Richtung beweglich gehalten und somit in der Lage, die Mattenstreifen 2b bzw. die daraus gebildeten Mattenstapel zur Weiterverarbeitung einem Preßwerkzeug zu zuführen.
Die beschriebene Ausgestaltung und Wirkungsweise der Längsschneideinrichtung 10 ist in sofern von Vorteil, als jedes zugehörige Messer 10a mit hoher Schnittgeschwindigkeit an der Mattenbahn 2 zur Einwirkung kommt, wodurch sich eine einwandfreie Unterteilung in Mattenstreifen 2b erreichen läßt.
Bei der Ausführung gemäß Fig. 3 ist die Längsschneideinrichtung 10 mit sechs Messern 10a ausgestattet, denen - der Anzahl der zu erzeugenden Mattenstreifen 2b entsprechend - sieben gemeinsam an dem Schlitten 12 befestigte Greiforgane 11 zugeordnet sind; die von links nach rechts mitgeführte Mattenbahn 2 zerfällt also nach Beendigung des Längs- und Querschneidevorganges in sieben Mattenstreifen 2b, die nebeneinanderliegend auf der in Fig. 2 dargestellten Transporteinrichtung 14 abgelegt werden können.

Zweckmäßigerweise wird der Querschneidevorgang bei noch in den Bereich der Harzmattenbahn 2 hochgeschwenkten Messern 10a durchgeführt, wodurch eine seitliche Verschiebung der Mattenstreifen 2b verhindert wird; die Messer 10a nehmen dabei selbstverständlich eine Lage ein, durch welche der Querschneidevorgang nicht behindert wird.

Der mit dem Erfindungsgegenstand erzielte Vorteil ist insbesondere darin zu sehen, daß aus einer von ihren Deckfolien befreiten Harzmattenbahn unmittelbar mehrere Mattenstreifen hergestellt werden können, aus denen sich durch Ablage übereinander in einfacher Weise mehrere Mattenstapel bilden lassen.

## Patentansprüche

1. Verfahren zur Herstellung von Mattenstreifen aus breiteren klebrigen, mit Deckfolien belegten Werkstoffbahnen durch Unterteilen der Werkstoffbahnen (2) in Längs- und in Querrichtung und durch Abziehen der Deckfolien (9a,9b), wobei der durch einen Deckfolienabzug (8a) von der oberen Deckfolie (9a) befreite Endabschnitt der Werkstoffbahn (2) einer Fördereinrichtung zugeführt wird und die Werkstoffbahn (2) mit einer der Mattenstreifen-Länge entsprechenden Bewegung der Fördereinrichtung mittels einer Längsschneideinrichtung (10) unterteilt wird, bevor bei entfernter unterer Deckfolie (9b) die Mattenstreifen von der Werkstoffbahn (2) durch Betätigen einer Querschneideinrichtung (6) abgetrennt werden,
dadurch gekennzeichnet, daß:
a) der über eine Klemmeinrichtung (7) hinausragende, von den Deckfolien (9a,9b) befreite Endabschnitt (2a) der Werkstoffbahn (2) von Greiforganen (11) der Fördereinrichtung erfaßt wird, wobei die Klemmeinrichtung (7) zum Klemmen des ungeteilten und mit Deckfolien belegten Bereiches der Werkstoffbahn (2) und der sich anschließende Folienabzug (8) in der Bewegungsrichtung der Werkstoffbahn (2) gesehen unmittelbar vor der Querschneideinrichtung (6) und der sich anschließenden Längsschneideinrichtung (10) angeordnet sind,
b) die Werkstoffbahn (2) bei entfernter unterer Deckfolie (9b) unter Wirkung einer durch die Greiforgane (11) aufgebrachten Zugkraft durch die Messer (10a) der Längsschneideinrichtung (10) gezogen und in Mattenstreifen (2b) unterteilt wird und
c) der ungeteilte und mit Deckfolien belegte Bereich der Werkstoffbahn (2) während der Tätigkeit der Querschneideinrichtung (6) mittels der klemmeinrichtung (7) festgeklemmt wird.

2. Verfahren nach Anspruch 1,
dadurch gekennzeichnet,
daß von der Längsschneideinrichtung (10) zumindest zeitweilig eine der Mitnahmebewegung der Greiforgane (11) entgegengerichtete Schnittbewegung ausgeführt wird.

3. Verfahren nach Anspruch 2,
dadurch gekennzeichnet,
daß die Längsschneideinrichtung (10) durch eine Schwenkbewegung mit der Werkstoffbahn (2) in Eingriff gebracht wird.

4. Verfahren nach einem der Ansprüche 1 bis 3,
dadurch gekennzeichnet,
daß die Greiforgane (11) vor der Annäherung an den Endabschnitt der Werkstoffbahn (2) bezüglich deren Ebene in geöffnetem Zustand eine Schwenkbewegung ausführen.

5. Vorrichtung zur Durchführung des Verfahrens nach einem der Ansprüche 1 bis 4, mit einer zumindest einen Messer aufweisenden Längsschneideinrichtung (10), einer Querschneideinrichtung (6) und einer Vorschubeinrichtung (5), durch die die Werkstoffbahn (2) in den Wirkbereich der Längs- und Querschneideinrichtung (6 bzw. 10) zuführbar ist, mit einem Deckfolienabzug (8a,8b), einer den Schneideinrichtungen vorgelagerten Klemmeinrichtung (7) zum Festklemmen der Werkstoffbahn (2) und mit einer Transporteinrichtung (14), auf der die Mattenstreifen (2b) ablegbar sind,
dadurch gekennzeichnet,
- daß die Klemmeinrichtung (7) und der sich anschließende Folienabzug (8a,8b) - in Bewegungsrichtung (Pfeil 4) der Werkstoffbahn (2) gesehen - vor der Querschneideinrichtung (6) und der dieser nachgeschalteten Längsschneideinrichtung (10) angeordnet sind,
- daß mehrere entlang einer Führungsbahn (13) verfahrbare zangenförmige Greiforgane (11) vorgesehen sind, durch die die Werkstoffbahn (2) - an ihrem über die Klemmeinrichtung (7) hinausragenden Endabschnitt (2a) gehalten - über eine der Mattenstreifen-Länge entsprechende Länge durch den Wirkbereich der Längsschneideinrichtung (10) bei sich in der Bewegungsbahn der Werkstoffbahn (2) befindlichem zumindest einen Messer der Längsschneideinrichtung (10) gezogen werden kann und
- daß mittels des zumindest einen Messers (10a) der Längsschneideinrichtung (10) eine der Mitnahmebewegung der Greiforgane (11) entgegengerichtete Schnittbewegung ausführbar ist.

6. Vorrichtung nach Anspruch 5, dadurch gekennzeichnet, daß die an einem Schlitten (12) gehaltenen Greiforgane (11) entlang einer Führungsbahn (13) hin und her verfahrbar sind.

7. Vorrichtung nach Anspruch 6, dadurch gekennzeichnet, daß der der Klemmeinrichtung (7) zugewandte Abschnitt der Führungsbahn (13) schwenkbar gehalten ist.

8. Vorrichtung nach Anspruch 6, dadurch gekennzeichnet, daß die Greiforgane (11) bezüglich des Schlittens (12) schwenkbar und über einen Schwenkantrieb in unterschiedlichen Schwenkstellungen festhaltbar sind.

9. Vorrichtung nach zumindest einem der Ansprüche 5 bis 8, dadurch gekennzeichnet, daß das zumindest eine Messer (10a) der Längsschneideinrichtung (10) um eine unterhalb der Ebene der Werkstoffbahn (2) angeordnete Achse (10b) drehbar an einem Schwenkarm (10c) gehalten ist, an dem ein Schwenkantrieb (10d) angreift.

## Claims

1. Process for manufacturing mat strips from relatively wide tacky webs of material lined with cover foils by dividing the webs of material (2) in the longitudinal and in the transverse direction and by pulling off the cover foils (9a, 9b), whereby the end section of the web of material (2) from which the upper cover foil (9a) has been removed by a cover foil take-off device (8a) is supplied to a conveying device and the web of material (2) is divided by means of a longitudinal cutting device (10) as the conveying device moves in the longitudinal direction of the mat strip, prior to the mat strips being separated, after removal of the lower cover foil (9b), from the web of material (2) by actuating a tranverse cutting device (6),
characterised in that:
a) the end section (2a) of the web of material (2) from which the cover foils (9a, 9b) have been removed and which projects beyond a clamping device (7) is seized by gripping elements (11) of the conveying device, whereby the clamping device (7) for clamping the undivided section of the web of material (2) lined with cover foils and the adjoining foil take-off device (8), viewed in the direction in which the web of material (2) moves, are arranged directly upstream of the transverse cutting device (6) and the adjoining longitudinal cutting device (10),
b) the web of material (2) is, after removal of the lower cover foil (9b) and as a result of a tensile force applied by the gripping elements (11), pulled through the knives (10a) of the longitudinal cutting device (10) and divided into mat strips (2b), and
c) the undivided section of the web of material (2) lined with cover foils is clamped with the aid of the clamping device (7) while the transverse cutting device (6) operates.

2. Process according to claim 1,
characterised in that
the longitudinal cutting device (10) carries out, at least intermittently, a cutting movement in the direction opposite to that of the pulling movement of the gripping elements (11).

3. Process according to claim (2),
characterised in that
the longitudinal cutting device (10) is made to engage the web of material (2) by a swivel movement.

4. Process according to one of claims 1 to 3,
characterised in that
prior to approaching the end section of the web of material (2) the gripping elements (11) carry out a swivel movement while being in the open state in relation to the plane of said web of material.

5. Arrangement for carrying out the process according to one of claims 1 to 4 comprising a longitudinal cutting device (10) with at least one knife, a transverse cutting device (6) and a feeding device (5), whereby the web of material (2) is capable of being advanced within operational range of the longitudinal and the transverse cutting device (6 and 10, respectively), and further comprising a cover foil take-off device (8a, 8b), a clamping device (7) for clamping the web of material (2), said clamping device being upstream of the cutting devices, and a conveying device (14) onto which the mat strips (2b) can be deposited,
characterised in that,
viewed in the direction of movement (arrow 4) of the web of material (2), the clamping device (7) and the adjoining foil take-off device (8a, 8b) are arranged upstream of the transverse cutting device (6) and the longitudinal cutting device (10) downstream of said transverse cutting device,
in that several tong shaped gripping elements (11) capable of being driven along a guide track (13) are provided, whereby the web of material (2), held by its end section (2a) projecting beyond the clamping device (7), can be pulled, with the aid of said gripping elements, throughout a length corresponding to the length of the mat strip through the operational range of the longitudinal cutting device (10), at least one knife of the longitudinal cutting device (10) being present in the path in which the web of material (2) moves, and
- in that, with the aid of the at least one knife (10a) of the longitudinal cutting device (10), a cutting movement can be carried out in the direction opposite to that of the pulling movement of the gripping elements (11).

6. Arrangement according to claim 5, characterised in that the gripping elements (11) mounted on a carriage (12) can be driven to and fro along a guide track (13).

7. Arrangement according to claim 6, characterised in that the section of guide track (13) facing the clamping device (7) is so designed as to be capable of swivelling.

8. Arrangement according to claim 6, characterised in that the gripping elements (11) can be swivelled in relation to the carriage (12) and secured with the aid of a swivel drive, in different swivelled positions.

9. Arrangement according to at least one of claims 5 to 8, characterised in that the at least one knife (10a) of the longitudinal cutting device (10) is mounted on a swivel arm (10c) on which acts a swivel drive (10d) so as to be capable of rotation about an axis (10b) arranged below the plane of the web of material (2).

## Revendications

1. Procédé de fabrication de bandes de plaques de mats, à partir de bandes de matière, adhésives, plus larges, recouvertes de feuilles de revêtement, en divisant les bandes de matière (2) suivant le sens longitudinal et suivant le sens transversal et en retirant les feuilles de revêtement (9a, 9b), étant entendu que la partie d'extrémité de la bande de matière (2), qui est libérée par un dispositif d'enlèvement (8a) de la feuille de revêtement supérieure (9a), est envoyée dans un dispositif de transport et que la bande de matière (2) est divisée, au moyen d'un dispositif de coupe longitudinale (10), avec un mouvement du dispositif de transport, correspondant à la longueur de bande de mats, avant que les plaques de mats, lorsqu'a été enlevée la feuille de revêtement inférieure (9b), soient séparées en actionnant un dispositif de coupe transversal (6),
caractérisé
a) en ce que la partie d'extrémité (2a) de la bande de matière (2), qui est libérée des feuilles de revêtement (9a, 9b), et qui dépasse au-delà d'un dispositif de pincement (7), est saisie par des organes de préhension (11) du dispositif de transport, étant entendu que le dispositif de pincement (7) destiné à pincer la zone de la bande de matière (2), non séparée et recouverte par des feuilles de revêtement, et le dispositif d'enlèvement (8) faisant suite à ce dispositif de pincement, sont disposés, en regardant dans le sens du mouvement de la bande de matière (2), directement avant le dispositif de coupe transversal (6) et le dispositif de coupe longitudinale (10) qui se raccorde à lui,
b) en ce que la bande de matière (2), lorsqu'a été enlevée la feuille de revêtement inférieure (9b), est tirée sous l'action d'une force de traction exercée par les organes de préhension (11), au travers du couteau (10a) du dispositif de coupe longitudinale (10) et est divisée en plaques de mats (2b), et
c) en ce que la zone non séparée de la bande de matière (2), couverte par des feuilles de revêtement, est pincée fermement au moyen du dispositif de pincement (7) pendant le fonctionnement du dispositif de coupe transversal (6).

2. Procédé suivant la revendication 1, caractérisé en ce qu'au moins à certains moments, un mouvement de coupe, dirigé en sens contraire du mouvement d'entraînement des organes de préhension (11), est exécuté par le dispositif de coupe longitudinale (10).

3. Procédé suivant la revendication 2, caractérisé en ce que le dispositif de coupe longitudinale (10) est enclenché avec la bande de matière (2) par un mouvement de pivotement.

4. Procédé suivant l'une quelconque des revendications 1 à 3, caractérisé en ce que les organes de préhension (11) exécutent, à l'état ouverts, un mouvement de pivotement par rapport à leur plan, avant de s'approcher de la partie d'extrémité de la bande de matière (2).

5. Dispositif pour la mise en oeuvre du procédé suivant l'une quelconque des revendications 1 à 4, comportant un dispositif de coupe longitudinale (10) présentant au moins un couteau, un dispositif de coupe transversal (6) et un dispositif d'avance (5), au moyen duquel la bande de matière (2) peut être envoyée dans la zone d'action respective du dispositif de coupe transversal (6) et du dispositif de coupe longitudinale (10), comportant un dispositif d'enlèvement (8a, 8b) des feuilles de revêtement, un dispositif de pincement (7) placé avant les dispositifs de coupe, pour pincer fermement la bande de matière (2), et comportant un dispositif de transport (14) sur lequel on peut déposer les plaques de mats (2b),
caractérisé
- en ce que le dispositif de pincement (7) et le dispositif d'enlèvement (8a, 8b) des feuilles de revêtement qui lui est raccordé sont disposés - en regardant dans le sens du mouvement de la bande de matière (2) (flèche 4) - avant le dispositif de coupe transversal (6) et le dispositif de coupe longitudinale (10), qui lui est associé côté aval,
- en ce qu'il est prévu plusieurs organes de préhension (11) en forme de languettes, pouvant se déplacer le long d'une voie de guidage (13), et au moyen desquels la bande de matière (2) - tenue à sa partie d'extrémité (2a) dépassant du dispositif de pincement (7) - peut être tirée, sur une longueur correspondant à la longueur de la bande de mat, au travers de la zone active du dispositif de coupe longitudinale (10), près d'un ou de plusieurs couteaux du dispositif de coupe longitudinale (10), qui sont placés sur la trajectoire du mouvement de la bande de matière (2), et
- en ce qu'au moyen de ce couteau, ou de ces couteaux, (10a) du dispositif de coupe longitudinale (10), un mouvement de coupe peut être exécuté dans le sens opposé au mouvement d'entraînement des organes de préhension (11).

6. Dispositif suivant la revendication 5, caractérisé en ce que les organes de préhension (11), maintenus sur un chariot (12), peuvent se déplacer dans les deux sens, le long d'une voie de guidage (13).

7. Dispositif suivant la revendication 6, caractérisé en ce que la partie de la voie de guidage (13) tournée vers le dispositif de pincement (7) est maintenue avec possibilité de pivoter.

8. Dispositif suivant la revendication 6, caractérisé en ce que les organes de préhension (11) peuvent pivoter par rapport au chariot (12) et peuvent être fixés dans différentes positions de pivotement au moyen d'un dispositif moteur pour le pivotement.

9. Dispositif suivant au moins l'une quelconque des revendications 5 à 8, caractérisé en ce que le ou les couteaux (10a) du dispositif de coupe longitudinale (10) sont maintenus sur un bras pivotant (10c), attaqué par un dispositif moteur du pivotement (10d), en peuvant tourner autour d'un axe (10b) disposé en-dessous du plan de la bande de matière (2).
